# EUROPEAN PATENT APPLICATION

(11) **EP 1 372 094 A1**
(43) Date of publication of application: **17.12.2003**
(21) Application number: 02711411.5
(22) Date of filing: 08.02.2002
(51) Int. Cl.: G06F 17/60

(54) **ESTIMATION EVALUATION SYSTEM**

(30) Priority: 20.02.2001 JP 2001043389
(71) Applicant: Honda Giken Kogyo Kabushiki Kaisha, Minato-ku, Tokyo 107-8556 (JP)
(72) Inventor: IWAI, Kazuhiro, KK Honda Gijutsu Kenkyusho, Wako-shi, Saitama 351-0193 (JP); NASU, Tomio, KK Honda Gijutsu Kenkyusho, Wako-shi, Saitama 351-0193 (JP); WADA, Kazuhiro, KK Honda Gijutsu Kenkyusho, Wako-shi, Saitama 351-0193 (JP); KAWANO, Akio, KK Honda Gijutsu Kenkyusho, Wako-shi, Saitama 351-0193 (JP)
(74) Representative: Quinterno, Giuseppe
(86) International application number: JP0201082
(87) International publication number: WO02067163

(57) **Abstract**

An estimate evaluation system is provided for correctly evaluating the estimated price of a product through considering the cost of physical distribution.

The estimate evaluation system comprises a production cost data table (101a) for storing data about the cost of manufacturing a product, a physical distribution cost data table (102a) for storing data about the cost of physical distribution based on each site, an estimating means for calculating the estimate price at the manufacturing site of the product, which is manufactured at the site and transported to another site, from the data about the cost of manufacturing the product and the data about the cost of physical distribution, and an estimate result releasing means for releasing the estimated price of the product.

## Description

### Technical Field

The present invention relates to an estimate evaluation system for evaluating the estimated price of a product and particularly to an estimate evaluation system for comprehensively evaluating the estimated price of a product through calculating the physical distribution costs including forwarding cost and transport cost.

### Background Art

It is common, as disclosed in Japanese Patent Laid-open Publication (Heisei)9-190945 or 9-231265, to determine the finally estimated, reasonable price of a product from the total cost of materials, processing step, and assembling step.

Even as it is desirable that the estimated price is compared with other estimated prices for judging its propriety and thus used for further negotiation about some discount, its system has not been developed so far.

As components of a general-purpose type are now available from worldwide areas, their manufacturers may be located in different countries or differentcurrency markets. For example, while one product is designed and planned in one country A, it may be assembled in another country B. Alternatively, while a product is designed in the country A, its components may be purchased and assembled in the country B. For another instance, a product may be assembled to its half-finished form in a country C and then transferred into the country B where it is completed.

For such a case, it is a common practice to convert the estimated price in another currency of a product submitted by each manufacturer into the currency of the purchaser which is then compared with the other estimated prices from different manufacturers or its own market to determine proprietary supplier.

The physical distribution costs may be varied depending on the manufacturing site or country. It is now assumed that the purchaser in the country A selects and purchases a product from any manufacturer in the country B or C. For example, while the estimated price of the product is 10 yen in the country B and 12 yen in the country 12, the cost of transferring the product from the manufacturer to the purchaser in the country A is 9 yen from the country B and 5 yen from the country C. It is accordingly known that the total cost is lower from the country C.

In any prior art, the estimated price of a product may hardly be evaluated including the physical distribution costs. This will technically inhibit the selection of an optimum supplier.

It is an object of the present invention to provide an estimate evaluation system which can correctly evaluate the estimated price of a product through considering the cost of physical distribution.

### Disclosure of Invention

For achievement of the above object, an estimate evaluation system of the present invention having a production cost data table for storing data about the cost of manufacturing a product, a physical distribution cost data table for storing data about the cost of physical distribution based on each site, an estimating means for calculating the estimate price of the product at another manufacturing site, which is manufactured at one site and transported to the another site, from the data about the cost of manufacturing the product and the data about the cost of physical distribution, and an estimate result output means for outputting the estimated price of the product.

The above feature allows the cost of physical distribution between different sites to be easily calculated. Accordingly, for example, as a product is to be delivered to the site D, its estimate price can precisely be calculated at any case when manufactured at the site B and delivered to the site D or when manufactured at the site C and delivered to the site D. This permits the estimated price of a particular product to be simply compared between different manufacturing sites and between different physical distribution routes.

### Brief Description of Drawings

Fig.1 is a block diagram of one embodiment of an estimate evaluation system according to the present invention.
Fig. 2 schematically illustrates an arrangement of the country A estimate DB.
Fig. 3 schematically illustrates an example of the data structure in the production cost data table.
Figs. 4A, 4B are views explaining the functions of an export cost factor table, an import cost factor table, and a transport cost factor table.
Fig. 5 illustrates an example of the export cost factor table.
Fig. 6 illustrates an example of the import cost factor table.
Fig. 7 illustrates an example of the transport cost factor table.
Fig. 8 schematically illustrates an arrangement of the country B estimate DB.
Figs. 9A, 9B and 9C schematically illustrate examples of the data structure in the production cost data table.
Fig. 10 is a view explaining a calculating method of physical cost.
Fig. 11 illustrates an indication example of the estimate result.

### Best Mode for Embodying the Invention

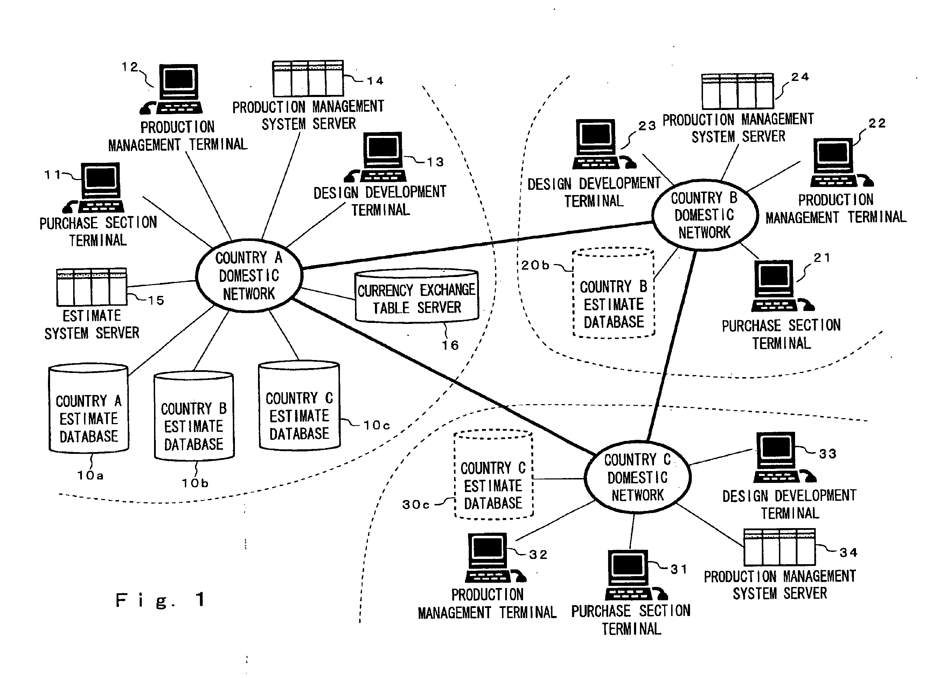

The present invention will be described in more detail referring to the relevant drawings. Fig. 1 is a block diagram of one embodiment of an estimate evaluation system according to the present invention.

Provided in the country A of the purchaser are a group of man/machine interfaces including a purchase section terminal 11, a production management terminal 12, and a design development terminal 13, a production management system server 14, an estimate system server 15, a current exchange table 16, and a group of a country A estimate database (DB) 10a, a country B estimate database 10b, and a country C estimate database 10c which will be explained later in more detail.

Provided in the country B of one of the manufacturers are a group of man/machine interfaces including a purchase section terminal 21, a production management terminal 22, and design development terminal 23, a production management system server 24, and a country B estimate database 20b.

Provided in the country C of another one of the manufacturers are a group of man/machine interfaces including a purchase section terminal 31, a production management terminal 32, and design development terminal 33, a production management system server 34, and a country C estimate database 30c.

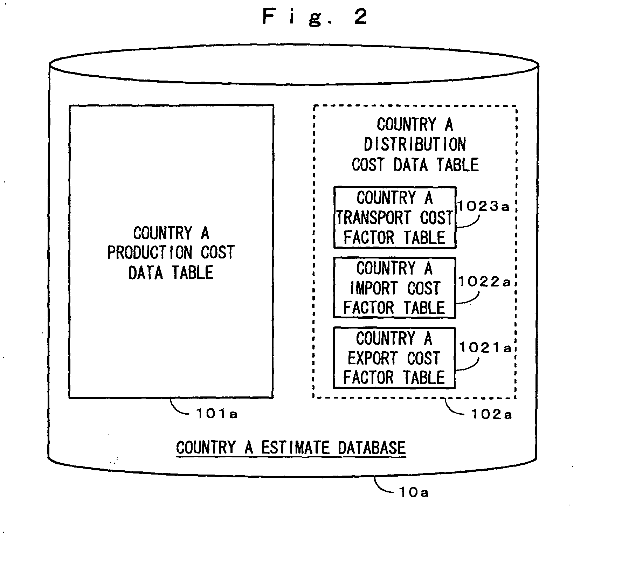

Fig. 2 schematically illustrates an arrangement of the estimate DB provided at each member site. The database arrangement is for instance illustrated in the formof the country A estimate DB 10a provided in the country A.

The country A estimate DB 10a includes a country Aproduction cost data table 101a for storing the production cost data of the country A and a country A physical distribution cost data table 102a for storing the physical distribution cost data of the country A based on each physical distribution cost factor.

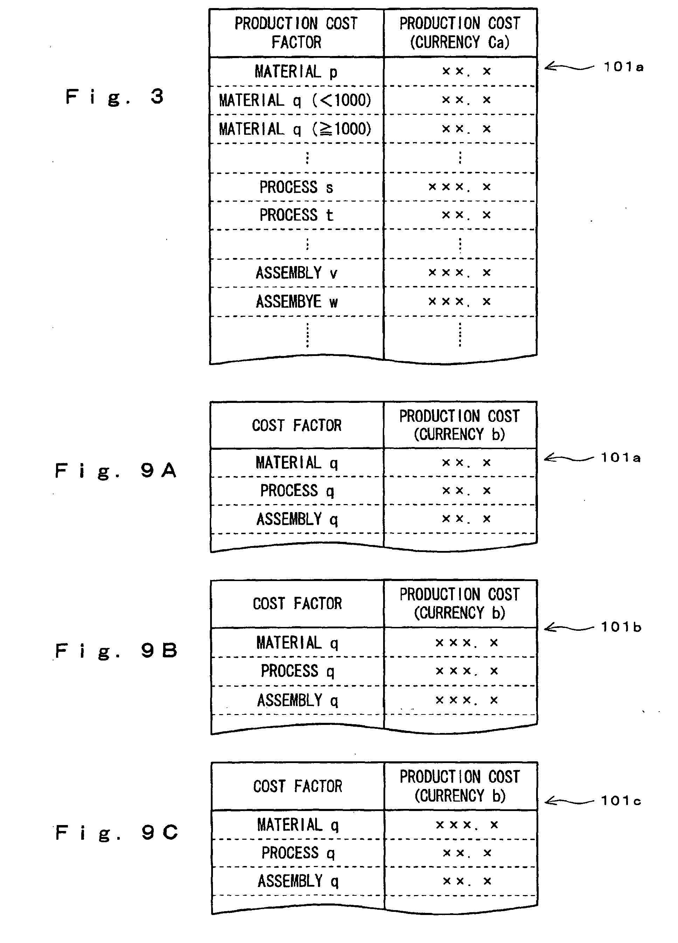

Fig. 3 schematically illustrates an example of the data structure in the country A production cost data table 101a where the production cost factors including the materials, the processing steps, and the assembling steps are listed with their costs at the currency Ca of the country A (e.g. Thai Bahts when the country A is Thailand).

The production cost may be varied depending on the quantity. In this embodiment, the price of the material q is different between smaller than 1000 and not smaller than 1000. The estimated cost of a component or product manufactured by subjecting a material p to a processing step s and an assembling step v may be determined as a sum of their costs.

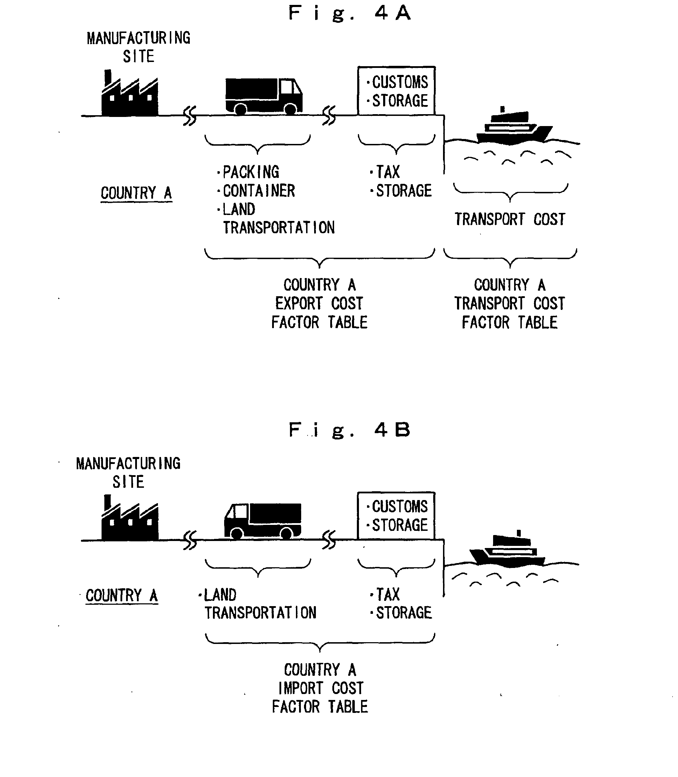

Figs. 4A, 4B are views explaining the actions of an export cost factor table 1021a, an import cost factor table 1022a, and a transport cost factor table 1023a registered and saved in the country A physical distribution data table 102a.

The country A export cost factor table 1021a holds the physical distribution cost based on the cost factors (e.g. packing cost and land transportation) for transferring a product from the manufacturing site to the departure point in the country A (Fig. 4A) . In this embodiment, the physical distribution cost includes the costs of tax, storage, and other relevant factors required for import or export of the product.

The country A transport cost factor table 1023a holds the physical distribution cost based on the cost factors (e.g. shipment) for transferring a product from the country A to the destination point (Fig. 4A) . The country A import cost factor table 1022a holds the physical distribution cost based on the cost factors (e.g. land transportation and tax) for transferring a product from the arrival point to the manufacturing site in the country A (Fig. 4B).

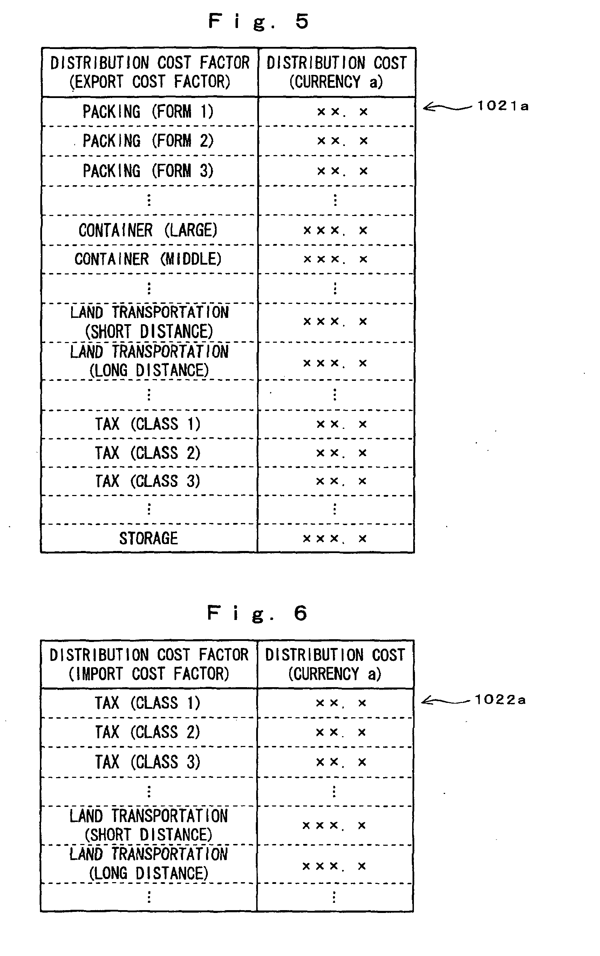

Fig. 5 illustrates an example of the country A export cost factor table 1021a where the packing cost is classified into different types, the container cost into difference sizes, the land transport cost into different distances, and the tax fee into different categories.

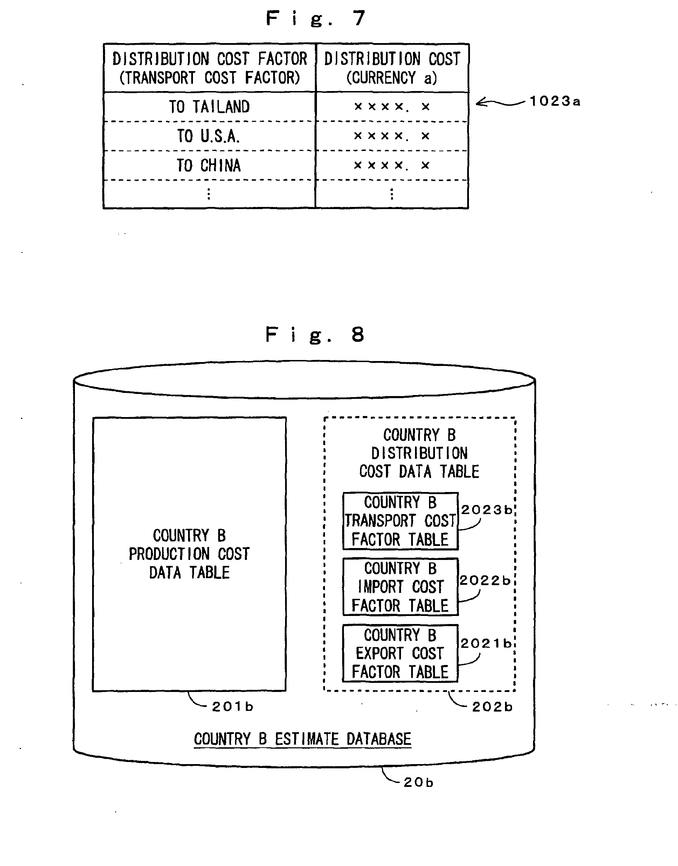

Fig. 6 illustrates an example of the country A import cost factor table 1022a where the tax fee is classified into different categories and the land transport cost is classified into difference distances. Fig. 7 illustrates an example of the country A transport cost factor table 1023a where the physical distribution cost from the country A to each destination is listed.

The estimate DB 20b provided in the country B also includes a production cost data table 201b for listing the production cost data of a product manufactured in the country B, as shown in Fig. 8. Similarly, an export cost factor table 2021b holds the physical distribution cost for transferring a product from the manufacturing site to the departure point in the country B. An import cost factor table 2022b holds the physical distribution cost for transferring a product from the arrival point to the manufacturing site in the country B . A transport cost factor table 2023b holds the physical distribution cost for transferring a product from the country B to the destination point.

The estimate DB 30c provided in the country C also includes a production cost data table for listing the production cost data of a product manufactured in the country B. Similarly, an export cost factor table holds the physical distribution cost for transferring a product from the manufacturing site to the departure point in the country C. An import cost factor table holds the physical distribution cost for transferring a product from the arrival point to the manufacturing site in the country C. A transport cost factor table holds the physical distribution cost for transferring a product from the country C to the destination point.

The country B estimate DB 10b and the country C estimate DB 10c provided in the country A are replicas of the country B estimate DB 20b provided in the country B and the country C estimate DB 30c provided in the country C respectively where the data are periodically updated by transferring data copies, hence ensuring the data matching between two counterparts.

Returning to Fig. 1, the design development section of each country designs a component, half-product, or product which satisfies the predetermined requirements and notifies the purchase section and the production management section of materials, processing steps, and structural arrangements from its terminal 13, 23, or 33.

The purchase section selects and negotiates with suppliers of the materials notified from the design development section 13, 23, or 33 and registers resultant prices into the production cost data table of the estimate DB 10a, 20b or 30c using its terminal 11, 21, or 31. The production management section calculates the cost of the processing steps and the assembling steps for the component, half-product, or product from the material, the processing steps, and the structural arrangement supplied by the design development terminal 13, 23, or 33 and registers the same into the production cost data table in the estimate DB 10a, 20b, or 30c from its terminals 21, 22, or 23.

A procedure of the purchaser in the country A determining the manufacturing site will now be explained. It is assumed that a produce Q is manufactured by subjecting a material q to a processing step q and an assembling step q.

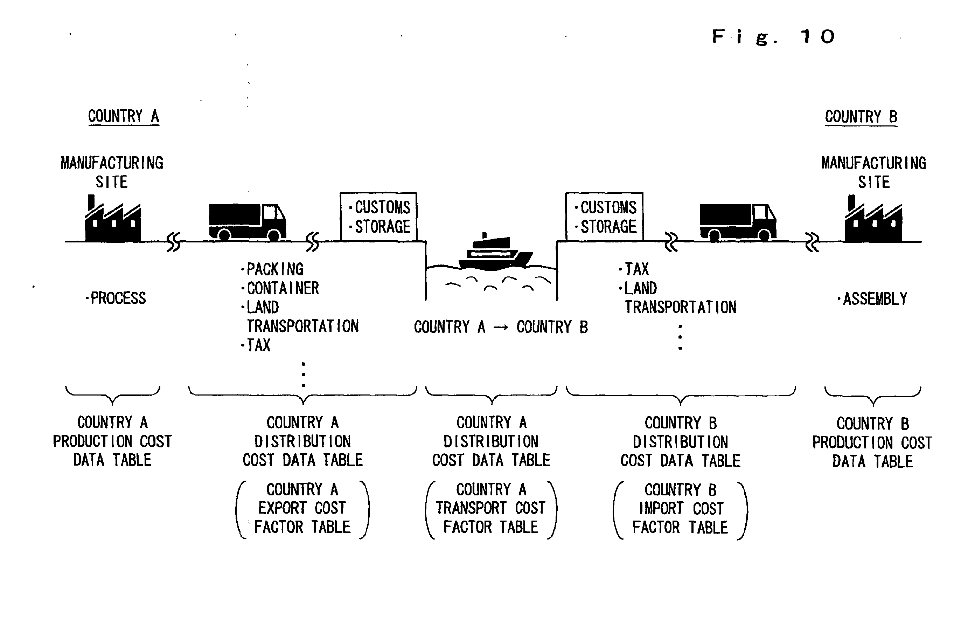

Figs. 9A, 9B and 9C illustrate the country A production cost data table 101a, the country B production cost data table 101b, and the country C production cost data table 101c respectively saved in their respective estimate DBs 10a, 10b, and 10c in the country A. As described, the estimated cost of the product Q is based on the material q, the processing step q, and the assembling step q provided in each country.

When the estimation of the price of the product Q is initiated with the use of the material q, the processing step q, and the assembling step q by an operator manipulating the purchase section terminal 11 in the country A, the estimate system server 15 gets access to the production cost data tables 101a, 101b, and 101c in the estimate DBs 10a, 10b, and 10c respectively to obtain the production cost data based on the various cost factors at each manufacturing site.

Also, the estimate system server 15 examines the physical distribution cost table of each of the estimate DBs 10a, 10b, and 10c to calculate the physical distribution cost at each manufacturing site.

For example, when the material q is obtained in the country A and the processing step q and the assembling step q are carried out in the country A, the price of the material q, the cost of the processing step q, and the cost of the assembling step q are received from the country A production cost data table 101a.

Alternatively, when the material q is obtained, subjected to the processing step q in the country A, and transferred to the country B where it is assembled, the country A production cost data table 101a is accessed for having the cost of the material q and the processing step q, the export cost factor table 1021a in the country A physical distribution cost data table 102a is accessed for having the cost of export, and the country A transport cost factor table 1023a is accessed for having the cost of transportation to the country B.

The estimate system server 15 further accesses the import cost factor table 2022b of the physical cost data table in the country B estimate DB 10b to obtain the cost of import and the country B production cost data table 101b to obtain the cost of the assembling step q.

When the finished product is intended to be exported to the country D, its estimated price in the country D may be calculated by addition with the cost of export from the manufacturing country, the cost of transportation from the manufacturing country to the country D, and the cost of import in the country D.

As the cost of production and the cost of physical distribution have been received, the estimate system server 15 retrieves the data of currency exchange between the country A and the other country from the currency exchange table 16 to convert the cost of production and the cost of physical distribution into the currency in the country A. Finally, the estimated price of the product Q is calculated from the costs of production and the costs of physical distribution. The estimated price of the product at each site is then transferred from the estimate system server 15 to the purchase section terminal 11 where it is displayed with its comparisons.

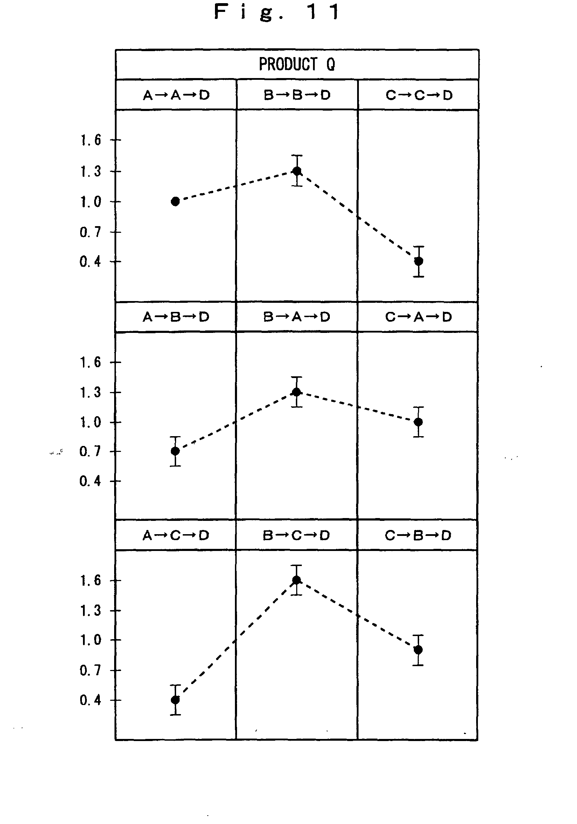

Fig. 11 illustrates an example of the list of the estimated prices displayed at the purchase section terminal 11. Denoted by A->A->D is the estimated price of the product which is prepared with the materials in the country A, subjected to the processing step and the assembling step in the country A, and received by the country D. Similarly, denoted by A->B->D is the estimated price of the product which is prepared with the materials and subjected to the processing step in the country A, transferred and subjected to the assembling step in the country B, and received by the country D.

In this embodiment, the estimated price is expressed on the bases of the absolute price 1.0 at A->A->D. It is hence apparent that the lowest is at A->C->D.

The present invention is not limited to the embodiment where the estimated prices at different manufacturing sites of a product are displayed and compared at a particular user site but may be arranged where the estimated price of a product manufactured at a particular site is displayed and compared at different user sites or the estimated prices at different manufacturing sites of a product are displayed and compared at different user sites.

The embodiment of the present invention allows the cost of physical distribution for transferring a product from one site to another to be easily calculated. For example, as a product is to be delivered to the site D, its estimate price can precisely be calculated at any case when manufactured at the site B and delivered to the site D or when manufactured at the site C and delivered to the site D. This permits the estimated price of a particular product to be compared between different manufacturing sites and between different physical distribution routes.

Also, the embodiment of the present invention allows the cost data pertinent to each manufacturing site to be centrally managed by the purchasing site, thus facilitating the comparison of the estimated price between different manufacturing sites. Moreover, the embodiment of the present invention has the currency exchange table provided for converting the currency of each site to a desired currency. As the cost data pertinent to each site are saved at the currency of the user site, their modification due to a currency change can simply be accepted through not rewriting the database but modifying the currency exchange table.

### Industrial Applicability

As set forth above, the present invention has the following advantages.
(1) The present invention allows the cost of physical distribution for transferring a product from one site to another to be easily calculated. For example, as a product is to be delivered to the site D, its estimate price can precisely be calculated at any case when manufactured at the site B and delivered to the site D or when manufactured at the site C and delivered to the site D. This permits the estimated price of a particular product to be compared between different manufacturing sites and between different physical distribution routes.
(2) The present invention allows the cost data pertinent to each manufacturing site to be centrally managed by the purchasing site, thus facilitating the comparison of the estimated price between different manufacturing sites.
(3) The present invention has the currency exchange table provided for converting the currency of each site to a desired currency. As the cost data pertinent to each site are saved at the currency of the user site, their modification due to a currency change can simply be accepted through not rewriting the database but modifying the currency exchange table.

## Claims

1. An estimate evaluation system comprising:
a production cost data table (101a) for storing data about the cost of manufacturing a product;
a physical distribution cost data table (102a) for storing data about the cost of physical distribution based on each site;
an estimating means (15) for calculating the estimate price of the price at another manufacturing site, which is manufactured at one site and transported to the another site, from the data about the cost of manufacturing the product and the data about the cost of physical distribution; and
an estimate result output means (11) for outputting the estimated price of the product.

2. An estimate evaluation system according to claim 1, wherein the cost of physical distribution includes an additional cost required for export and import of the product.

3. An estimate evaluation system (15) according to claim 1 or 2, wherein the estimating means calculates the estimated prices at different sites of a product manufactured at one site and the estimate result output means (11) displays a list of the estimated prices.

4. An estimate evaluation system (15) according to any one of claims 1 through 3, wherein the estimating means calculates the estimated price at one site of products manufactured at different plural sites and the estimate result output means displays a list of the estimated prices.

5. An estimate evaluation system (15) according to any one of claims 1 through 4, wherein the estimating means calculates the estimated prices at different plural sites of products manufactured at the different plural sites and the estimate result outputting means displays a list of the estimated prices.

6. An estimate evaluation system according to any one of claims 1 through 5, wherein the production cost data table (101a) stores the cost of manufacturing a product based on each site and the estimating means calculates the estimated price at each site of the product.

7. An estimate evaluation system according to any one of claims 1 through 6, further comprising a currency exchange table (16) for converting the currency at each site to a desired currency, wherein the physical distribution cost data table stores the data about the costs of physical distribution at the other sites which are expressed by the currency of its site and the estimating means can express all the costs of physical distribution at the other sites in a single currency using the currency exchange table.

8. An estimate evaluation system according to any one of claims 1 through 7, wherein the physical distribution cost data table (102a) comprises a first physical distribution cost data table for storing data about the cost of physical distribution in its country and a second physical distribution cost data table for storing data about the costs of physical distribution in other countries, the second physical distribution cost data table being updated in response to the data from the other countries.
